# EUROPEAN PATENT APPLICATION

(11) **EP 1 755 354 A1**
(43) Date of publication of application: **21.02.2007**
(21) Application number: 05730599.7
(22) Date of filing: 12.04.2005
(51) Int. Cl.: H04Q 7/34

(54) **METHOD AND SYSTEM FOR DETERMINING RESIDENCE WITHIN SERVICE AREA IN MOBILE COMMUNICATION NETWORK**

(30) Priority: 07.06.2004 JP 2004168825
(71) Applicant: NEC CORPORATION, Minato-ku, Tokyo 108-8001 (JP)
(72) Inventor: TANOUE, Katsumi, Minato-ku, Tokyo 1088001 (JP)
(74) Representative: Samson & Partner
(86) International application number: PCT/JP2005/007064
(87) International publication number: WO 2005/122615

(57) **Abstract**

An object of the present invention is to provide a system for determining whether or not a mobile unit is present in the service area of a repeater through a simple system. A method of determining the presence of a mobile unit in a service area in a mobile communication network having a mobile unit, a radio base station apparatus for communicating with the mobile unit with a radio signal, and a radio relay unit for amplifying a radio signal in both directions between said radio base station apparatus and said mobile unit, comprising the steps of: assigning, in said radio relay unit, an identification code, for identifying a service area provided by said radio relay unit, to a radio signal transmitted from said radio base station apparatus to said mobile unit; including, in the radio base station apparatus, a broadcast control signal that is used by the identification signal transmitted to said mobile unit; and confirming, in said mobile unit, whether or not the mobile unit is present in a service area provided by said radio relay unit, by using said identification code and said broadcast control information, and, if it is confirmed that the mobile unit is present in the service area provided by said radio relay unit, transmitting a signal indicative of the presence of the mobile unit in the service area provided by said radio relay unit to said radio base station apparatus.

## Description

Method of and system for determining the presence of mobile unit in service area in mobile communication network

### Technical field:

The present invention relates to a mobile communication network based on CDMA principles which has a plurality of relay units (hereinafter referred to as repeaters) disposed in a service area provided by one radio base station, each of the repeaters having a radio amplifying function in both the direction from the radio base station to a mobile unit and the direction from the mobile unit to the radio base station, and more particularly to a method of determining whether a mobile unit is present in the service area of a repeater in a mobile communication network.

### Background art:

JP-A No. 63-51727 discloses an arrangement for placing a repeater between a radio base station and a radio terminal and for allowing a repeater to provide a new service area.

There are employed a plurality of positional information detecting processes (RTT, OTDOA, etc.) based on CDMA principles, using propagation delay differences between base stations and a mobile unit. According to these positional information detecting processes, the positional information of the mobile unit is spatially calculated by measuring propagation delay differences between a plurality of (three or more) base stations and the mobile unit.

In a mobile communication network wherein a repeater is disposed in the service area provided by a radio base station, a propagation path via the repeater suffers a control delay of a radio signal in the repeater. Therefore, a propagation delay between the base station and a mobile unit cannot be accurately estimated, and the positional information of the mobile unit cannot be calculated normally.

In a CDMA system, the initial transmission power value in an individual channel (DPCH) and the transmission power value in a downlink common channel (FACH) are determined according to the following procedure:
1. A base station broadcasts a transmission power value in a downlink pilot channel (PCPICH) with broadcast control information.
2. A mobile unit measures a reception power value in the downlink pilot channel (PCPICH) in the area.
3. The mobile unit sends the reception power value in the PCPICH to the base station in an uplink common channel (RACH).
4. The base station estimates a propagation loss between the base station and the mobile unit from the difference between the transmission power value in the PCPICH and the reception power value sent from the mobile unit.
5. The base station calculates an initial transmission power value from the calculated propagation loss.

The above conventional initial transmission power calculating process is performed based on the precondition that the downlink loss, i.e., the loss in the direction from the base station to the mobile unit, and the uplink loss, i.e., the loss in the direction from the mobile unit to the base station, are regarded as equivalent to each other. However, in a radio link via a repeater, the downlink gain and the uplink gain of the repeater may not necessarily be identical to each other, and hence the transmission power value cannot be appropriately determined.

In the above mobile communication network system that use the radio repeater, it is important to confirm whether or not the mobile unit is present in the service area of the repeater for the purpose of increasing the accuracy with which to detect positional information and to determine a transmission power value.

One arrangement for detecting the presence of a mobile unit in a service area in a mobile communication network system is disclosed in JP-A No. 2000-69538.

It is an object of the invention disclosed in JP-A No. 2000-69538 to provide an apparatus for enabling each of the communication networks having differently structured databases to recognize the information about the presence of a mobile unit in a service area. Specifically, JP-A No. 2000-69538 reveals a system in which a communication network having received a terminal identification code from a mobile terminal distributes its own identification code and the terminal identification code as broadcast control information to other communication units, and when broadcast control information including a terminal identification code managed by each of the communication networks arrives, each of the communication networks writes the identification information of the communication network which has sent the broadcast control information and that is associated with the terminal identification code into its own database.

### Disclosure of the invention:

### Problems to be solved by the invention:

As described above, in the mobile communication network system that uses the radio repeater, it is important to confirm whether or not the mobile unit is present in the service area of the repeater or not for the purpose of increasing the accuracy with which to detect positional information and to determine a transmission power value. An arrangement for detecting the presence of a mobile unit in a service area in a mobile communication network system is disclosed in Patent Document 2. However, the disclosed invention is concerned with confirming in which one of a plurality of communication networks a mobile unit is present, and does not confirm whether or not a mobile unit is present in the service area of a repeater. In addition, the disclosed invention is problematic in that the system arrangement is large in size and is highly costly because of the distribution of broadcast control information to a plurality of communication networks.

The present invention has been made in view of the conventional problems described above. It is an object of the present invention to provide a method of and a system for determining whether or not a mobile unit is present in the service area of a repeater through a simple system arrangement for thereby increasing the accuracy for detecting positional information and for detecting determine a transmission power value.

### Means for solving the problems:

According to the present invention, there is provided a method of determining the presence of a mobile unit in a service area in a mobile communication network having a mobile unit, a radio base station apparatus for communicating with the mobile unit via a radio signal, and a radio relay unit for amplifying a radio signal in both directions between the radio base station apparatus and the mobile unit, comprising the steps of:
assigning, in the radio relay unit, an identification code, for identifying a service area provided by the radio relay unit, to a radio signal transmitted from the radio base station apparatus to the mobile unit;
including, in the radio base station apparatus, broadcast control signal that is used by the identification signal transmitted to the mobile unit; and
confirming, in the radio base station apparatus, whether or not the mobile unit is present in a service area provided by the radio relay unit, by using the identification code and the broadcast control information, and, if it is confirmed that the mobile unit is present in the service area provided by the radio relay unit, transmitting a signal indicative of the presence of the mobile unit in the service area provided by the radio relay unit to the radio base station apparatus.

According to the present invention, there is also provided a system for determining the presence of a mobile unit in a service area in a mobile communication network having a mobile unit, a radio base station apparatus for communicating with the mobile unit via a radio signal, and a radio relay unit for amplifying a radio signal in both directions between the radio base station apparatus and the mobile unit, wherein
the radio relay unit assigns an identification code for identifying a service area provided by the radio relay unit to a radio signal transmitted from the radio base station apparatus to the mobile unit;
including, in the radio base station apparatus, broadcast control signal that is used by the identification signal transmitted to the mobile unit; and
the mobile unit confirms whether or not the mobile unit is present in a service area provided by the radio relay unit, by using the identification code and the broadcast control information, and, if it is confirmed that the mobile unit is present in the service area provided by the radio relay unit, transmits a signal indicative of the presence of the mobile unit in the service area provided by the radio relay unit to the radio base station apparatus.

In the above method and the above system,
the identification code is spread by a code which is orthogonal to another radio channel of the radio relay unit;
the broadcast control information comprises spreading code information of the identification code and threshold value information indicative of a threshold value; and
the mobile unit despreads the identification code based on the spreading code information, compares the despread code with the threshold value indicated by the threshold value information, and judges that the mobile unit is present in the service area provided by the radio relay unit if the despread code is greater than the threshold value.

### Advantages of the invention:

Based on the method according to the present invention, since the radio relay unit transmits the identification code and the radio base station apparatus transmits the broadcast control information, it is possible to detect whether or not the mobile unit is present in the service area provided by the radio relay unit or not. As the radio base station apparatus is informed of information from the mobile unit as to whether or not the mobile unit is present in the service area provided by the radio relay unit, the radio base station apparatus can correct a propagation delay that occurs in combination with a known control delay of radio signals in the repeater. It is also possible to correct a propagation loss value and to determine an appropriate transmission power value, based on radio gain information which is either known or reported from the repeater to the base station.

Since a simple arrangement is employed in which the radio relay unit transmits the identification code, the radio base station apparatus transmits the broadcast control information, and the mobile unit confirms whether or not it is present in a service area, by using the identification code and the broadcast control information, and informs the radio base station apparatus of the confirmed result, the system arrangement is not large in size.

### Brief description of the drawings:

[Fig. 1] is a view showing an arrangement of a CDMA mobile communication system using a repeater according to an embodiment of the present invention;
[Fig. 2] is a view showing signal transmission at the time that a service area determining method according to the present invention is performed;
[Fig. 3](a) is a diagram showing the configuration of a radio signal sent from NodeB13, and (b) is a diagram showing the configuration of a radio signal sent from repeater 14;
[Fig. 4] is a diagram showing the configuration of broadcast control information 22;
[Fig. 5] is a flowchart showing an operation sequence of NodeB13 and mobile unit 15 at the time that the service area determining method according to the present invention is performed;
[Fig. 6] is a view showing an arrangement according to a second embodiment of the present invention; and
[Fig. 7] is a diagram showing the configuration of broadcast control information 622, 622'.

### Description of reference characters:

- 11: Mobile communication exchange network
- 12: Radio base station controller
- 13: Radio base station apparatus
- 14: Radio repeater
- 15: Mobile unit
- 16, 17: Service area

### Best mode for carrying out the invention:

Embodiments of the present invention will be described below with reference to the drawings.

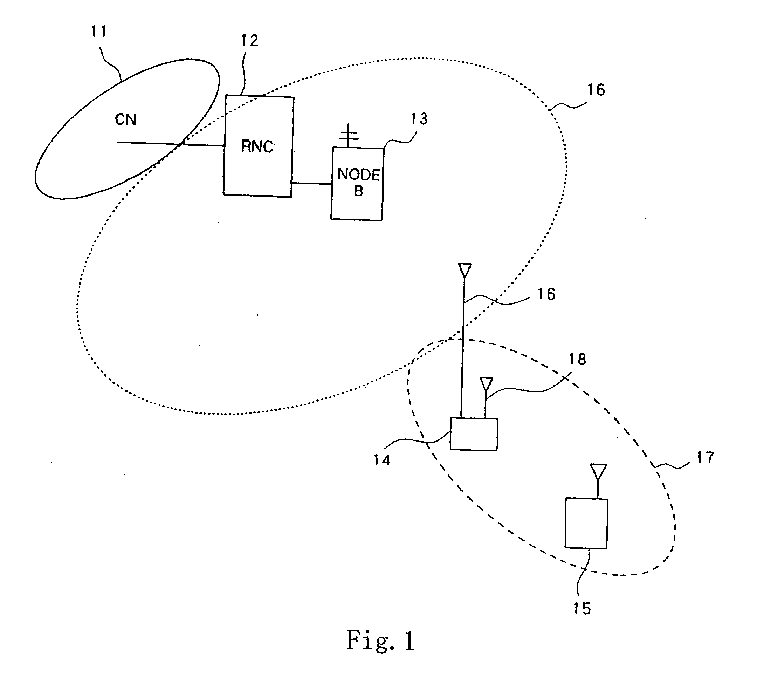

Fig. 1 is a view showing an arrangement of a CDMA mobile communication system using a repeater according to an embodiment of the present invention.

According to the present embodiment, the CDMA mobile communication system comprises mobile communication exchange network (hereinafter referred to as CN) 11, radio base station controller (hereinafter referred to as RNC) 12, radio base station apparatus (hereinafter referred to as NodeB) 13 under the control of RNC 12, radio relay unit (hereafter referred to as repeater) 14 disposed in service area 16 provided by NodeB 13, for receiving, amplifying, and transmitting radio signals in both directions between the base station and the mobile unit, and mobile unit 15 that is present in service area 17 provided by repeater 14.

Mobile unit 15 communicates through reception antenna 16 and transmission antenna 18 on repeater 14 to access CN 11 via repeater 14, NodeB 13, and RNC 12 for accessing a public network.

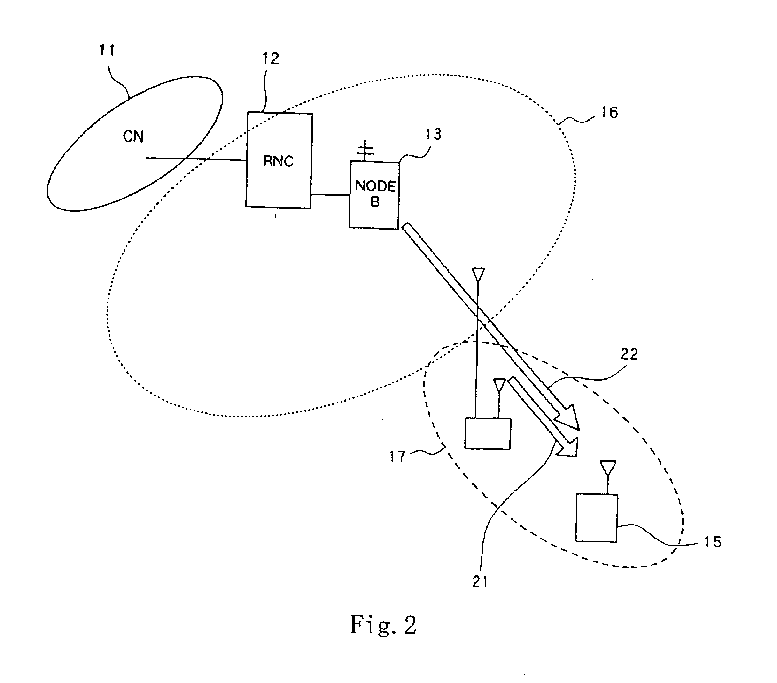

Fig. 2 is a view showing signal transmission at the time that a service area determining method according to the present invention is performed. In Fig. 2, repeater 14 assigns repeater identification code 21 for identifying its own service area to a downlink radio signal (a signal from the base station to the mobile unit), and transmits a radio signal to service area 17.

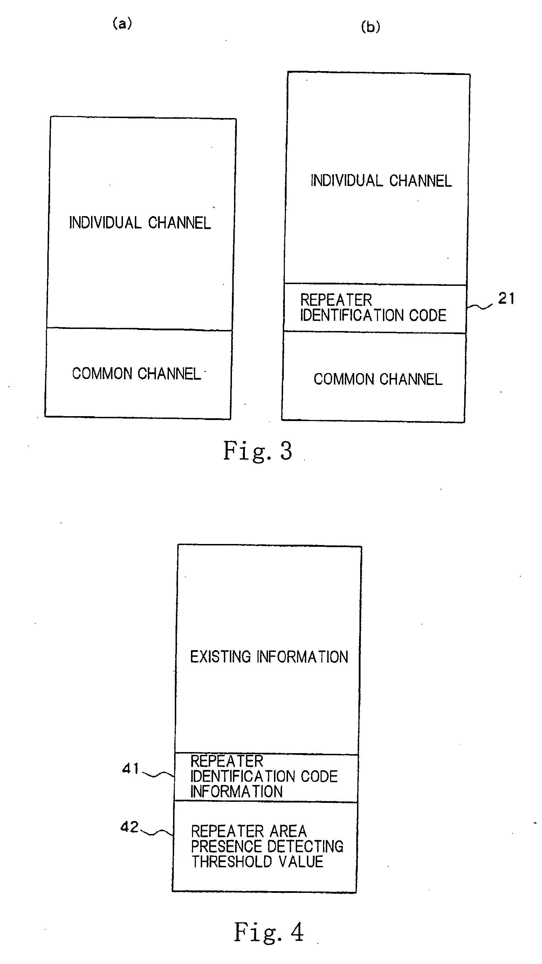

Fig. 3(a) is a diagram showing the configuration of a radio signal sent from NodeB13, and Fig. 3(b) is a diagram showing the configuration of a radio signal sent from repeater 14. As shown in Fig. 3(a), the radio signal sent from NodeB13 comprises an individual channel and a common channel. As shown in Fig. 3(b), the radio signal sent from repeater 14 comprises an individual channel and a common channel with repeater identification code 21 assigned thereto. Repeater identification code 21 represents broadcast control information which is common to service area 16 and service area 17 provided by repeater 14. Repeater identification code 21 is a second pilot channel (SCPICH) in a W-CDMA mobile communication system, for example, and is despread by a spreading code which is orthogonal to other radio channels (a common channel, an individual channel).

The common channel of the radio signal sent from NodeB13 includes broadcast control information 22 (see Fig. 2) which is common to service area 16 and service area 17 provided by repeater 14. Fig. 4 is a diagram showing the configuration of broadcast control information 22. As shown in Fig. 4, broadcast control information 22 includes repeater identification information 41 which is information about repeater identification code 21, and repeater area presence detecting threshold value 42.

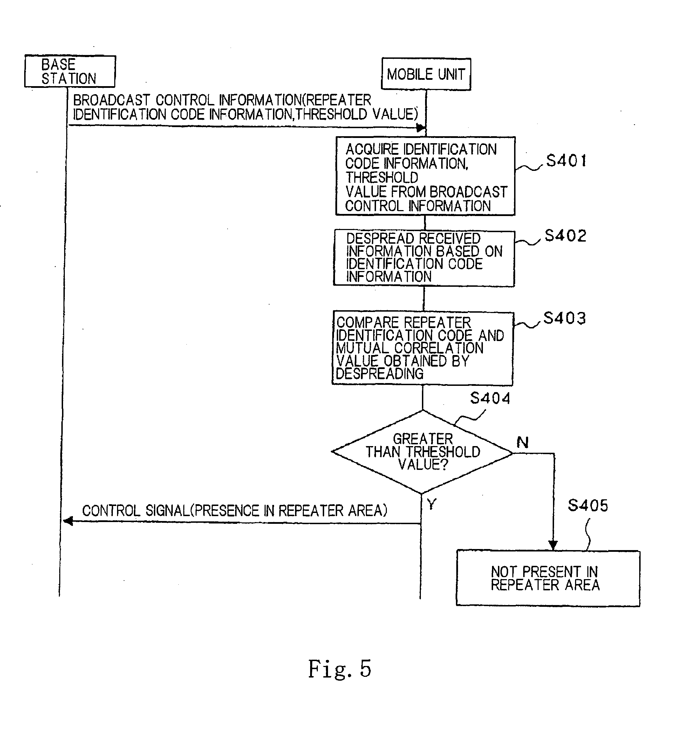

Fig. 5 is a flowchart showing an operation sequence of NodeB13 and mobile unit 15 at the time that the service area determining method according to the present invention is performed.

Mobile unit 15 detects whether or not it is present in the service area provided by the repeater according to the procedure shown in Fig. 5. First, mobile unit 15 acquires broadcast control information 22 sent from the base station. As shown in Fig. 4, broadcast control information 22 includes repeater area presence detecting threshold value 42 and repeater identification information 41 as information about repeater identification code 21. Mobile unit 15 acquires this value and information (step S401). The content of repeater identification information 41 is, for example, spreading code information of repeater identification code 21. Then, based on repeater identification information 41 acquired from the broadcast control information, mobile unit 15 despreads the received radio signal (step S402). Since repeater identification code 21 is spread by the code orthogonal to other radio channels, a high mutual correlation is obtained in service area 17 provided by repeater 14. Outside of service area 17 provided by repeater 14, i.e., in service area 16 provided by NodeB13, the mutual correlation is low. Mobile unit 15 compares repeater area presence detecting threshold value 42 indicated by broadcast control information 22 acquired in step S401 and the mutual correlation value acquired in step S402 with each other (step S403), and confirms their magnitudes, thereby determining whether or not mobile unit 15 is present in service area 17 provided by repeater 14 (step S404).

If mobile unit 15 confirms that the mutual correlation value is greater than repeater area presence detecting threshold value 42 in step S404, then mobile unit 15 sends a control signal indicating that mobile unit 15 is present in service area 17 provided by repeater 14, to NodeB13. If mobile unit 15 confirms that the mutual correlation value is not greater than repeater area presence detecting threshold value 42, then mobile unit 15 judges that mobile unit 15 is not present in service area 17 provided by repeater 14 (step S405).

According to the embodiment arranged as described above, the CDMA mobile communication system that uses a radio repeater is capable of detecting whether or not mobile unit 15 is present in service area 17 provided by repeater 14.

RNC 12 applies the detected result to a positional information detecting service, thereby making it possible to correct a control delay caused by repeater 14. Therefore, even when mobile unit 15 is present in service area 17 provided by repeater 14, an accurate positional information service can be provided.

RNC 12 may also apply the detected result to the transmission power control for a radio channel, so that even if the uplink and downlink radio amplification gains of repeater 14 are different from each other, they can be appropriately corrected for accurate transmission power control.

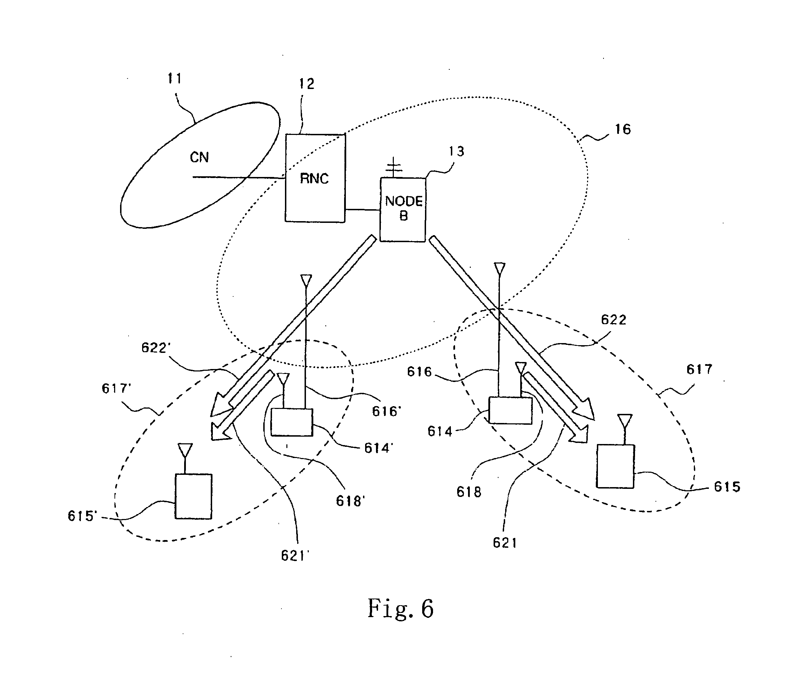

Fig. 6 is a view showing an arrangement according to a second embodiment of the present invention.

According to the present embodiment, a plurality of repeaters are disposed in a radio area provided by one NodeB, and service areas provided by the repeaters are present.

Fig. 6 shows, other than CN 11, RNC 12, NodeB13, and service area 16 provided by NodeB13 shown in Fig. 1, two repeaters 614, 614', service areas 617, 617', mobile units 615, 615' that are present in service areas 617, 617', reception antennas 616, 616' and transmission antennas 618, 618' on repeaters 614, 614', repeater identification codes 621, 621', and broadcast control information 622, 622'.

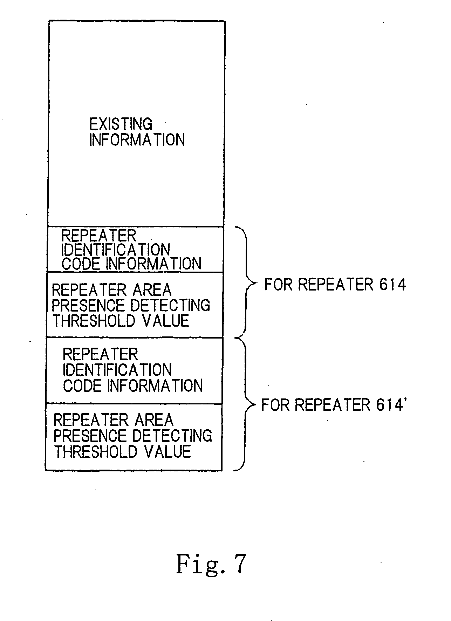

Repeater identification codes 621, 621' are assigned for repeaters 614, 614' to identify their own areas, and have different contents. Broadcast control information 622, 622' has the same contents. Fig. 7 is a diagram showing the configuration of broadcast control information 622, 622'. As shown in Fig. 7, broadcast control information 622, 622' includes repeater identification code information and repeater area presence detecting threshold values which are information for repeaters 614, 614'. Mobile units 615, 615' can confirm whether or not they are present in service areas 617, 617' of repeaters 614, 614' according to the procedure shown in Fig. 5. RNC 12 can confirm whether mobile units 615, 615' are present in service areas 617, 617' of repeaters 614, 614' based on control signals from the respective mobile units.

## Claims

1. A method of determining the presence of a mobile unit in a service area in a mobile communication network having a mobile unit, a radio base station apparatus for communicating with the mobile unit with a radio signal, and a radio relay unit for amplifying a radio signal in both directions between said radio base station apparatus and said mobile unit, comprising the steps of:
assigning, in said radio relay unit, an identification code, for identifying a service area provided by said radio relay unit, to a radio signal transmitted from said radio base station apparatus to said mobile unit;
including, in the radio base station apparatus, a broadcast control signal that is used by the identification signal transmitted to said mobile unit; and
confirming, in said mobile unit, whether or not the mobile unit is present in a service area provided by said radio relay unit, by using said identification code and said broadcast control information, and, if it is confirmed that the mobile unit is present in the service area provided by said radio relay unit, transmitting a signal indicative of the presence of the mobile unit in the service area provided by said radio relay unit to said radio base station apparatus.

2. The method according to claim 1, wherein
said identification code is spread by a code which is orthogonal to another radio channel of said radio relay unit;
said broadcast control information comprises spreading code information within said identification code and threshold value information indicative of a threshold value; and
said mobile unit despreads said identification code based on said spreading code information, compares the despread code with the threshold value indicated by said threshold value information, and judges that the mobile unit is present in the service area provided by said radio relay unit if the despread code is greater than said threshold value.

3. A system for determining the presence of a mobile unit in a service area in a mobile communication network having a mobile unit, a radio base station apparatus for communicating with the mobile unit with a radio signal, and a radio relay unit for amplifying a radio signal in both directions between said radio base station apparatus and said mobile unit, wherein
said radio relay unit assigns an identification code for identifying a service area provided by said radio relay unit to a radio signal transmitted from said radio base station apparatus to said mobile unit;
including, in the radio base station apparatus, a broadcast control signal that is used by the identification signal transmitted to said mobile unit; and
said mobile unit confirms whether or not the mobile unit is present in a service area provided by said radio relay unit, by using said identification code and said broadcast control information, and, if it is confirmed that the mobile unit is present in the service area provided by said radio relay unit, transmits a signal indicative of the presence of the mobile unit in the service area provided by said radio relay unit to said radio base station apparatus.

4. The system according to claim 3, wherein
said identification code is spread by a code which is orthogonal to another radio channel of said radio relay unit;
said broadcast control information comprises spreading code information within said identification code and threshold value information indicative of a threshold value; and
said mobile unit despreads said identification code based on said spreading code information, compares the despread code with the threshold value indicated by said threshold value information, and judges that the mobile unit is present in the service area provided by said radio relay unit if the despread code is greater than said threshold value.
